(19) **Europäisches Patentamt**

**European Patent Office**

**Office européen des brevets**

(11) Veröffentlichungsnummer: **0 531 848 B1**

(12) **EUROPÄISCHE PATENTSCHRIFT**

(45) Veröffentlichungstag der Patentschrift: **28.06.95**

(51) Int. Cl.6: **C08F 279/04**, C08F 291/02

(21) Anmeldenummer: **92114839.1**

(22) Anmeldetag: **31.08.92**

Die Akte enthält technische Angaben, die nach dem Eingang der Anmeldung eingereicht wurden und die nicht in dieser Patentschrift enthalten sind.

(54) **Verfahren zur Herstellung von Pfropfkautschuken unter reduzierter Koagulatbildung.**

(30) Priorität: **11.09.91 DE 4130104**

(43) Veröffentlichungstag der Anmeldung:
**17.03.93 Patentblatt 93/11**

(45) Bekanntmachung des Hinweises auf die Patenterteilung:
**28.06.95 Patentblatt 95/26**

(84) Benannte Vertragsstaaten:
**DE ES IT NL**

(56) Entgegenhaltungen:
**US-A- 3 624 183**

(73) Patentinhaber: **BAYER AG**

**D-51368 Leverkusen (DE)**

(72) Erfinder: **Eichenauer, Herbert, Dr.**
**Gustav-Heinemann-Strasse 3**
**W-4047 Dormagen 1 (DE)**
Erfinder: **Sümmermann, Klaus, Dr.**
**Von-Steinen-Strasse 1**
**W-5758 Fröndgenberg-Frömern (DE)**

EP 0 531 848 B1

**Beschreibung**

Die Erfindung betrifft ein Verfahren zur Herstellung von Pfropfpolymerisaten vom ABS-Typ durch Emulsionspolymerisation, wobei die Produkte unter reduzierter Koagulatbildung, d.h. mit erhöhter Ausbeute an verwertbarem Polymerisat erhalten werden.

ABS-Formmassen sind Zweiphasenkunststoffe aus:

I. einem thermoplastischen Copolymerisat aus Styrol und Acrylnitril, in dem das Styrol ganz oder teilweise durch α-Methylstyrol oder Methylmethacrylat ersetzt werden kann; dieses Copolymerisat, auch als SAN-Harz oder Matrix-Harz bezeichnet, bildet die äußere Phase;

II. mindestens einem Pfropfpolymerisat (vom ABS-Typ), welches hergestellt worden ist durch Pfropfreaktion eines oder mehrerer der unter I. genannten Monomeren auf Butadienhomo- oder -copolymerisat ("Pfropfgrundlage"). Dieses Pfropfpolymerisat ("Elastomerphase" oder "Pfropfkautschuk") bildet die disperse Phase im Matrixharz.

Während das Matrix-Harz I leicht durch radikalische Polymerisation in Lösung oder Suspension oder durch Massepolymerisation hergestellt werden kann, muß man das Pfropfpolymerisat II durch Emulsionspolymerisation unter Verwendung von Kautschuklatices mit den erforderlichen mittleren Teilchendurchmessern herstellen, um definierte feinteilige Polymerisate mit mittleren Teilchendurchmessern $d_{50}$ von ca. 0,08 bis 0,5 $\mu$m zu erhalten.

Ein kritischer Punkt bei der Emulsionspolymerisation, insbesondere bei der Pfropfpolymerisation in Gegenwart von Kautschukteilchen, ist die Bildung von Koagulat während der Polymerisation infolge ungenügender Stabilität der Latexteilchen, welche z.B. durch Anquellen des Kautschuks mit Monomeren oder durch Zusammenlagerung ungepfropfter oder schwach gepfropfter Kautschuklatexteilchen oder Einwirkung zu starker Scherkräfte (z.B. beim Rühren) hervorgerufen werden kann.

Die üblicherweise ergriffenen Gegen-Maßnahmen wie Erhöhung der Emulgatormenge oder Zusatz anderer, die Koagulation unterdrückender Reagenzien (z.B. Dispergatoren), lassen sich bei der Herstellung von Pfropfkautschuken für ABS-Polymerisate nicht ausnutzen, da neben einem unerwünschten Schäumen während der Polymerisation und der Aufarbeitung die Produkteigenschaften durch derartige zusätzlich eingebrachte Stoffe in starkem Maße verschlechtert werden (z.B. Erniedrigung der Modulwerte, Absenkung der Wärmeformbeständigkeit, Reduzierung der Zähigkeit, Verfärbungen bei thermischer Belastung).

Ebenso haben sich Beschichtungen der Reaktorinnenwand (vergl. z.B. EP-OS 382 102 oder EP-OS 397 009) zur Reduzierung der Koagulatbildung bei der Herstellung von Polymerisaten vom ABS-Typ nicht bewährt, da abgelöstes Beschichtungsmaterial zu nicht tolerierbaren Verschlechterungen der Produktqualität führt.

Es wurde gefunden, daß Pfropfpolymerisate vom ABS-Typ durch Emulsionspolymerisation ohne Erhöhung der Gesamtemulgatormenge bei deutlicher Reduzierung der Koagulatmenge und unter Beibehaltung der Eigenschaften der resultierenden Pfropfkautschuke hergestellt werden können, wenn man Monomere und Emulgatoren in einer speziellen Weise einbringt.

Gegenstand der Erfindung ist ein Verfahren zur Herstellung von Pfropfpolymerisaten vom ABS-Typ durch Emulsionspolymerisation mit getrennter Zugabe von Monomeren und Emulgatorlösung zum Kautschuklatex, das dadurch gekennzeichnet ist, daß die Monomeren und die Emulgatorlösung durch separate Zuleitungen gleichzeitig in Inkrementen während eines vorgegebenen Zeitraums dem Kautschuklatex zugefügt werden, wobei der vorgegebene Zeitraum n Zeitintervalle $\Delta\, t_n$ enthält mit n = 3 bis 30, bevorzugt 3 bis 15 und $\Delta\, t_n$ 5 bis 100, vorzugsweise 10 bis 90 und besonders bevorzugt 15 bis 75 Minuten lang ist und daß mindestens während der ersten Hälfte des vorgegebenen Zeitraums in jedem Zeitintervall $\Delta\, t_n$ die zugefügten Inkremente

$$A = \frac{\text{Emulgatormenge im Zeitintervall } \Delta t_n}{\text{gesamte Emulgatormenge}}$$

und

$$B = \frac{\text{Monomermenge im Zeitintervall } \Delta t_n}{\text{gesamte Monomermenge}}$$

solche Werte annehmen, daß A > B und A:B = 1,10 bis 2,00, bevorzugt 1,15 bis 1,80 und besonders bevorzugt 1,20 bis 1,60 ist und im restlichen Anteil des vorgegebenen Zeitraumes in jedem Zeitintervall $\Delta t_n$ A:B > 0,35 ist.

In einer bevorzugten Ausführungsform der Erfindung werden die Monomeren so zugegeben, daß mindestens in der ersten Hälfte des vorgegebenen Zeitraumes die in jedem Zeitintervall $\Delta t_{n+1}$ zugegebene Monomerteilmenge das 0,30- bis 0,95-fache, vorzugsweise das 0,40- bis 0,90-fache und besonders bevorzugt das 0,45- bis 0,85-fache, der im vorhergehenden Zeitintervall $\Delta t_n$ zugegebenen Monomermenge beträgt. Vorzugsweise werden zusammen mit den Pfropfmonomeren 0,05 bis 1,00 Gew.-Teile, vorzugsweise 0,08 bis 0,80 Gew.-Teile pro 100 Gew.-Teile Pfropfmonomere eines Mercaptans zugegeben.

Die erfindungsgemäß verwendeten Kautschuke müssen eine Glastemperatur unterhalb von 0 °C besitzen.

Geeignet sind z.B.:

Dienkautschuke, z.B. Homopolymerisate von konjugierten Dienen mit 4 bis 8 C-Atomen wie Butadien, Isopren, Chloropren oder deren Copolymerisate mit bis zu 60 Gew.-%, bevorzugt 1 bis 30 Gew.-% eines Vinylmonomeren, wie Acrylnitril, Methacrylnitril, Styrol, $\alpha$-Methylstyrol, Halogenstyrole, $C_1$-$C_4$-Alkylstyrole, $C_1$-$C_6$-Alkylacrylate und -methacrylate, Alkylenglykol-di-acrylate und -methacrylate, sowie Divinylbenzol;

Acrylatkautschuke, z.B. Homo- und Copolymerisate von $C_1$-$C_{10}$-Alkylacrylaten wie Homopolymerisate von Ethylacrylat, Butylacrylat, Ethylhexylacrylat oder Copolymerisate mit bis zu 40 Gew.-%, bevorzugt nicht mehr als 10 Gew.-% Mono-Vinylmonomeren, z.B. Styrol, Acrylnitril, Vinylbutylether, Acrylsäure(ester), Methacrylsäure-(ester), Vinylsulfonsäure. Bevorzugt werden solche Acrylatkautschukhomo- bzw. copolymerisate eingesetzt, die 0,01 bis 8 Gew.-% Divinyl- oder Polyvinylverbindungen und/oder N-Methylolacrylamid- (oder -methacrylamid) -Derivate enthalten, die als Vernetzer wirken, z.B. Divinylbenzol, Triallylcyanurat, und für einen Gehalt des Kautschuks an C = C-Doppelbindungen sorgen;

Terpolymer-Kautschuke, z.B. Copolymerisate aus monoolefinischen Kohlenwasserstoffen, wie Ethylen, Propylen und Dienen, wie Butadien, Cyclopentadien.

Bevorzugt sind Polybutadienkautschuke, SBR-Kautschuke mit bis zu 30 Gew.-% einpolymerisiertem Styrol und Acrylatkautschuke, besonders solche, die eine Kern-Mantel-Struktur aufweisen, wie in DE-OS 3 006 804 beschrieben, sowie EPDM-Kautschuke.

Zur Herstellung der erfindungsgemäßen Formmassen kommen Latices mit mittleren Teilchendurchmessern ($d_{50}$) von 0,05 bis 2,0 $\mu m$, vorzugsweise 0,1 bis 1,0 $\mu m$, in Betracht. Die mittleren Teilchendurchmesser werden mittels Ultrazentrifuge (verg. W. Scholtan, H. Lange: Kolloid.-Z. u. Z. Polymere 250, S. 782-796 (1972) bestimmt. Gemische mehrerer Latices können ebenfalls verwendet werden (vergl. DE-OS 1 813 719). Diese Latices werden in der Regel durch Emulsionspolymerisation hergestellt; die erforderlichen Reaktionsbedingungen, Hilfsstoffe und Arbeitstechniken sind dem Fachmann bekannt.

Es ist auch möglich, nach bekannten Methoden zunächst einen feinteiligen Kautschuk herzustellen und ihn anschließend in bekannter Weise zur Einstellung der erforderlichen Teilchengröße zu agglomerieren. Einschlägige Techniken sind beschrieben (vergl. EP-PS 0 029 613; EP-PS 0 007 810; DD-PS 144 415; DE-AS 12 33 131; DE-AS 12 58 076; DE-OS 21 01 650; US-PS 1 379 391.

Ebenfalls kann nach der Saatpolymerisationstechnik gearbeitet werden, bei der zunächst z.B. ein feinteiliges Butadienpolymerisat hergestellt und dann durch Weiterumsatz mit Butadien enthaltenden Monomeren zu größeren Teilchen weiterpolymerisiert wird.

Prinzipiell kann man Kautschuklatices auch herstellen durch Emulgieren von fertigen Kautschuken in wäßrigen Medien (vergl. japanische Patentschrift 55 125 102).

Die erfindungsgemäßen Pfropfpolymerisate vom ABS-Typ können durch Emulsionspolymerisation der Pfropfmonomeren in Gegenwart des als Latex vorliegenden Kautschuks (Pfropfgrundlage) bei 25°C bis 160°C, vorzugsweise 40°C bis 90°C hergestellt werden. Dabei können übliche Emulgatoren wie z.B. Alkylsulfate, Alkylsulfonate, Seifen gesättigter oder ungesättigter Fettsäuren, sowie alkalischer disproportionierter oder hydrierter Abietin- oder Tallölsauren verwendet werden.

Als Initiatoren kommen anorganische und organische Peroxide, z.B. $H_2O_2$, Di-tert.-Butylperoxid, Cumolhydroperoxid, Dicyclohexylpercarbonat, p-Menthanhydroperoxid, Azoinitiatoren wie z.B. Azobisisobutyronitril, anorganische Persalze wie Kaliumpersulfat, Kaliumperphosphat, Natriumperborat sowie Redox-Systeme in Betracht, die sich aus einem - in der Regel organischen - Oxidationsmittel und einem Reduktionsmittel zusammensetzen, wobei im Reaktionsmedium zusätzlich Schwermetallionen vorhanden sind (siehe H. Logemann in Houben-Weyl, Methoden der organischen Chemie, Bd. 14/1, S. 263-297).

Als Monomere zur Pfropfpolymerisation werden bevorzugt Styrol und Acrylnitril im Gewichtsverhältnis 90 : 10 bis 50 : 50, vorzugsweise 65 : 35 bis 75 : 25 eingesetzt, wobei Styrol ganz oder teilweise ersetzt werden kann durch $\alpha$-Methylstyrol oder Methylmethacrylat.

Nach dem erfindungsgemäßen Verfahren müssen die Monomeren und die Emulgatorlösung durch separate Zuleitungen gleichzeitig in Inkrementen über einen vorgegebenen Zeitraum derart zugefügt werden, daß mindestens während der ersten Hälfte des vorgegebenen Zeitraums für jedes Zeitintervall $\Delta t_n$ die Bedingung A > B erfüllt ist und zumindest während der ersten Hälfte des vorgegebenen Zeitraums innerhalb eines jeden Zeitintervalls $\Delta t_n$ das Verhältnis A : B = 1,10 und 2,00, vorzugsweise 1,15 und 1,80 und besonders bevorzugt 1,20 und 1,60 sein, jedoch innerhalb keines Zeitintervalls den Wert 0,35 unterschreiten, wobei A durch das Gew.-Verhältnis (zudosierte Emulgatormenge pro Zeitintervall $\Delta t$): (Gesamtemulgatormenge) und B durch das Gew.-Verhältnis (zudosierte Monomermenge pro Zeitintervall $\Delta t$): (Gesamtmonomermenge) definiert sind. Dabei umfaßt der gesamte Zeitraum n Zeitintervalle mit n = 3 bis 30, vorzugsweise 3 bis 15, und jedes Zeitintervall $\Delta t$ ist 5 bis 100, vorzugsweise 10 bis 90 und besonders bevorzugt 15 bis 75 Minuten lang.

Zusammen mit den Pfropfmonomeren können 0,05 bis 1,00 Gew.-Teile (pro 100 Gew.-Teile Pfropfmonomer), vorzugsweise 0,08 bis 0,8 Gew.-Teile (pro 100 Gew.-Teile Pfropfmonomer) eines oder mehrerer Mercaptane zugegeben werden.

Geeignete Mercaptane sind z.B. aliphatische Mercaptane wie Ethyl-, n-Propyl-, n-Butyl-, tert.-Butyl-, n-Pentyl, n-Hexyl-, n-Octyl-, n-Decyl-, n-Dodecyl-, tert.-Dodecyl-, n-Hexadecyl- und n-Octadecylmercaptan oder aromatische Mercaptane wie Thiophenol. Bevorzugte Mercaptane sind tert.-Dodecylmercaptan und n-Dodecylmercaptan und deren Gemische.

Die Pfropfpolymerisate besitzen einen Kautschukgehalt von 30 bis 80 Gew.-%, vorzugsweise von 35 bis 75 Gew.-%.

Zur Erzeugung der Formmassen wird das Pfropfpolymerisat mit einem Matrixharz abgemischt. Geeignete Matrixharze bestehen z.B. aus Copolymerisaten des Styrols und Acrylnitrils im Gewichtsverhältnis 90 : 10 bis 50 : 50, wobei das Styrol ganz oder teilweise durch $\alpha$-Methylstyrol oder Methylmethacrylat ersetzt werden kann, und wobei gegebenenfalls anteilmäßig bis zu 25 Gew.-%, bezogen auf Matrixharz, ein weiteres Monomer aus der Reihe Maleinsäureanhydrid, Malein-(Fumar)säurebisalkylester, Maleinsäureimid, N-(Cyclo)-alkylmaleinimid, N-(Alkyl)phenylmaleinimid, Inden mitverwendet werden kann.

Einzelheiten zur Herstellung dieser Harze sind beispielsweise in der DE-AS 24 20 358 und der DE-AS 27 24 360 beschrieben. Durch Massepolymerisation hergestellte Matrixharze haben sich besonders bewährt.

Zur Herstellung der Formmassen kann das Pfropfpolymerisat (II) mit dem Matrixharz auf verschiedene Weise gemischt werden. Wird das Matrixharz durch Emulsionspolymerisation hergestellt, so können die Latices gemischt und gemeinsam ausgefällt oder auch getrennt ausgefällt und die resultierenden Festsubstanzen gemischt werden.

Wird z.B. das Matrixharz durch Lösungs- oder Massepolymerisation hergestellt, so muß das Pfropfpolymerisat getrennt ausgefällt werden. Hierzu verwendet man bekannte Verfahren, beispielsweise Zusatz von Salzen und/oder Säuren, wonach die Fällprodukte gewaschen, getrocknet und gegebenenfalls aus der Pulverform in eine Granulatform überführt werden. Als Mischvorrichtungen für Fällprodukte bzw. Granulate kommen zB. Mehrwalzenstühle, Mischextruder oder Innenkneter in Betracht.

Der Anteil des Pfropfpolymerisats (II) an der Formmasse beträgt erfindungsgemäß 10 bis 65 Gew.-%, wobei der Anteil des tatsächlich gepfropften Materials geringer ist, da nicht die gesamten Monomeren Pfropfäste bilden. Bevorzugte Formmassen haben folgende Zusammensetzung;

| Pfropfpolymerisat (II): | 20 - 60 Gew.-Teile |
|---|---|
| Matrixharz: | 80 - 40 Gew.-Teile |

wobei mit Anteilen von 40 bis 60 Gew.-Teilen Pfropfpolymerisat (II) die höchsten Zähigkeiten erreicht werden.

Den Formmassen der Erfindung können bei der Herstellung, Aufarbeitung, Weiterverarbeitung und Endformung die erforderlichen bzw. zweckmäßigen Additive zugesetzt werden, z.B. Antioxidantien, UV-Stabilisatoren, Peroxidzerstörer, Antistatika, Gleitmittel, Flammschutzmittel, Füll- oder Verstärkerstoffe (Glasfasern, Kohlefasern etc.) und Farbmittel.

Die Endverformung kann auf handelsüblichen Verarbeitungsaggregaten vorgenommen werden und umfaßt z.B. Spritzgußverarbeitung, Plattenextrusion mit gegebenenfalls anschließender Warmverformung, Kaltverformung, Extrusion von Rohren und Profilen, Kalander-Verarbeitung u.a.m.

Weiter können die erfindungsgemäß hergestellten Pfropfpolymerisate als Modifikatoren zur Erhöhung der Zähigkeit einzelner oder aus verschiedenen Materialien gemischter thermoplastischer Formmassen dienen. Beispiele für modifizierbare thermoplastische Formmassen sind;

a) Weitere Homo- und Mischpolymerisate von Styrol und alkylsubstituiertem Styrol mit vinylgruppenhaltigen Monomeren, z.B. Polystyrol, Poly(p-methyl)styrol, Poly(styrol-co-maleinsäureanhydrid), Poly-(styrolco-acrylnitril-co-maleinsäure-N-phenylimid), Poly(styrol-co-maleinsäure-N-phenylimid),

b) Homo- und Mischpolymerisate von $C_1$-$C_4$-Alkyl-(meth)acrylaten mit vinylgruppenhaltigen Monomeren, z.B. Polymethylmethacrylat, Poly(methylmethacrylat-co-styrol), Poly(methylmethacrylat-co-maleinsäurean-hydrid), Poly(methylmethacrylat-co-styrol-co-maleinsäureanhydrid),

c) halogenhaltige Polymerisate, z.B. Polyvinylchlorid, Polyvinylidenchlorid, chloriertes Polyethylen,

d) Polycarbonate, z.B. auf Basis von Bisphenol A, Tetramethylbisphenol A, Tetrabrombisphenol A,

e) Polyester, z.B. auf Basis Terephthalsäure, Isophthalsäure, Ethylenglykol, Butandiol,

f) Polyamide, z.B. auf Basis $\epsilon$-Caprolactam, Laurinlactam, Adipinsäure/Hexamethylendiamin.

Dabei werden die erfindungsgemäß hergestellten Pfropfkautschuke in Mengen von 1 bis 80 Gew.-%, vorzugsweise 5 bis 50 Gew.-%, bezogen auf die gesamte Formmasse, eingesetzt.

In den folgenden Beispielen sind Teile immer Gewichtsteile und % immer Gew.-%, wenn nicht anders angegeben.

Beispiele

Beispiele 1 bis 12

50 Teile (gerechnet als Feststoff) eines durch radikalische Polymerisation hergestellten anionisch emulgierten Polybutadienlatex mit einem $d_{50}$-Wert von ca. 454 nm wurden mit Wasser auf einen Feststoffgehalt von ca. 20 % gebracht, wonach auf 65°C erwärmt und mit 0,5 Teilen $K_2S_2O_8$ versetzt wurde. Danach wurden 50 Teile eines Gemisches aus 36 Teilen Styrol und 14 Teilen Acrylnitril sowie 1 Teil (gerechnet als Festsubstanz) des Natriumsalzes eines Harzsäuregemisches (gelöst in alkalisch eingestelltem Wasser) über 4 bzw. 6 Stunden wie in Tabelle 1 angegeben, über separate Zuläufe zudosiert. Nach einer 4-stündigen Nachreaktionszeit wurde der Pfropflatex über ein 300 $\mu$m Sieb filtriert, wonach der verbleibende Rückstand (Koagulat) getrocknet wurde. Die resultierenden Mengen (Gew.-% bez. auf Gesamtpolymerfeststoff) sind in Tabelle 2 angegeben. Anschließend wurde der Pfropflatex nach Zugabe von ca. 1,0 Teilen eines phenolischen Antioxidans mit einem Magnesiumsulfat/Essigsaure-Gemisch koaguliert und nach dem Waschen das resultierende Pulver bei 70°C im Vakuum getrocknet.

40 Teile dieses Pfropfpolymerisats wurden mit 60 Teilen eines Styrol/Acrylnitril-Copolymerisats [Gewichtsverhältnis Styrol : Acrylnitril = 72 : 28, mittleres Molekulargewicht (Gewichtsmittel) $\overline{M}_w$ ~ 115 000; molekulare Uneinheitlichkeit

$$U = \frac{\overline{M}_w}{\overline{M}_n} - 1 \leq 2 \quad ],$$

2 Teilen Pentaerythrittetrastearat und 0,1 Teilen eines Silikonöls in einem Innenkneter vermischt und anschließend zu Normkleinstäben und zu einer Platte (zur Oberflächenbeurteilung) verspritzt.

EP 0 531 848 B1

Folgende Daten wurden ermittelt:

Kerbschlagzähigkeit bei -40 °C ($a_k^{-40°C}$) nach DIN 53 453 ($a_k$ in Einheit: kJ/m$^2$).

Fließverhalten durch Bestimmung des Volumen-Fließindex MVI nach DIN 53 735 U (Einheit: cm$^3$/10 min).

Der Oberflächenglanz wurde visuell beurteilt.

Wie aus Tabelle 2 ersichtlich ist, führt die erfindungsgemäße Herstellung der Pfropfkautschuke zu deutlich reduzierter Koagulatbildung. Die als besonders kritische Größe ermittelte Kerbschlagzähigkeit bei tiefer Temperatur, die thermoplastische Fließfähigkeit und der Oberflächenglanz von aus den Pfropfkautschuken hergestellten ABS-Formmassen werden dabei nicht negativ beeinflußt.

**Tabelle 1**  Dosiervarianten bei der Pfropfpolymerisation

| Beispiel | Emulgatordosierung*) (jeweils bezogen auf Gesamt-emulgatormenge) | | | | | | Monomerdosierung*) (jeweils bezogen auf Gesamt-monomermenge) | | | | | | A:B | A:B | A:B | A:B | A:B | A:B |
|---|---|---|---|---|---|---|---|---|---|---|---|---|---|---|---|---|---|---|
| | 1 h | 2 h | 3 h | 4 h | 5 h | 6 h | 1 h | 2 h | 3 h | 4 h | 5 h | 6 h | 1 h | 2 h | 3 h | 4 h | 5 h | 6 h |
| 1 | 4/10 | 3/10 | 2/10 | 1/10 | - | - | 1/4 | 1/4 | 1/4 | 1/4 | - | - | 1,6 | 1,2 | 0,8 | 0,4 | - | - |
| 2 | 3/10 | 3/10 | 3/10 | 1/10 | - | - | 1/4 | 1/4 | 1/4 | 1/4 | - | - | 1,2 | 1,2 | 1,2 | 0,4 | - | - |
| 3 (Vergl.) | 1/4 | 1/4 | 1/4 | 1/4 | - | - | 1/4 | 1/4 | 1/4 | 1/4 | - | - | 1 | 1 | 1 | 1 | - | - |
| 4 (Vergl.) | 1/10 | 2/10 | 3/10 | 4/10 | - | - | 1/4 | 1/4 | 1/4 | 1/4 | - | - | 0,4 | 0,8 | 1,2 | 1,6 | - | - |
| 5 (Vergl.) | 1/1 | 0 | 0 | 0 | - | - | 1/4 | 1/4 | 1/4 | 1/4 | - | - | 4 | 0 | 0 | 0 | - | - |
| 6 | 12/20 | 6/20 | 1/20 | 1/20 | - | - | 1/2 | 1/4 | 1/8 | 1/8 | - | - | 1,2 | 1,2 | 0,4 | 0,4 | - | - |
| 7 (Vergl.) | 1/2 | 1/4 | 1/8 | 1/8 | - | - | 1/2 | 1/4 | 1/8 | 1/8 | - | - | 1 | 1 | 1 | 1 | - | - |
| 8 | 2/10 | 2/10 | 2/10 | 2/10 | 1/10 | 1/10 | 1/6 | 1/6 | 1/6 | 1/6 | 1/6 | 1/6 | 1,2 | 1,2 | 1,2 | 1,2 | 0,6 | 0,6 |
| 9 | 3/10 | 2/10 | 2/10 | 1/10 | 1/10 | 1/10 | 1/6 | 1/6 | 1/6 | 1/6 | 1/6 | 1/6 | 1,8 | 1,2 | 1,2 | 0,6 | 0,6 | 0,6 |
| 10 (Vergl.) | 1/6 | 1/6 | 1/6 | 1/6 | 1/6 | 1/6 | 1/6 | 1/6 | 1/6 | 1/6 | 1/6 | 1/6 | 1 | 1 | 1 | 1 | 1 | 1 |
| 11 | 38/100 | 29/100 | 19/100 | 5/100 | 5/100 | 4/100 | 4/12 | 3/12 | 2/12 | 1/12 | 1/12 | 1/12 | 1,14 | 1,16 | 1,14 | 0,6 | 0,6 | 0,18 |
| 12 (Vergl.) | 4/12 | 3/12 | 2/12 | 1/12 | 1/12 | 1/12 | 4/12 | 3/12 | 2/12 | 1/12 | 1/12 | 1/12 | 1 | 1 | 1 | 1 | 1 | 1 |

Gesamtzeitraum der Zudosierung:  4 Zeitintervalle Δ t jeweils 60 min. bzw.
6 Zeitintervalle Δ t jeweils 60 min.

Die Brüche geben den zugefügten Bruchteil der genannten Emulgator- bzw. Monomerenmenge an.

EP 0 531 848 B1

**Tabelle 2**     Einflüsse der Dosiervarianten auf Koagulatmenge und technische Eigenschaften

| Beispiel | Koagulatmenge [%] | $a_K$ -40° C | Prüfdaten MVI | Glanz |
|---|---|---|---|---|
| 1 | 0,12 | 13,1 | 5,3 | glänzend |
| 2 | 0,13 | 13,4 | 5,4 | glänzend |
| 3 (Vergl.) | 0,43 | 13,3 | 5,4 | glänzend |
| 4 (Vergl.) | 0,67 | 12,9 | 4,8 | glänzend |
| 5 (Vergl.) | 0,08 | 9,8 | 5,9 | glanzreduziert |
| 6 | 0,16 | 13,7 | 5,5 | glänzend |
| 7 (Vergl.) | 0,92 | 13,8 | 5,1 | glänzend |
| 8 | 0,18 | 12,4 | 5,4 | glänzend |
| 9 | 0,18 | 12,7 | 5,5 | glänzend |
| 10 (Vergl.) | 0,79 | 12,9 | 5,0 | glänzend |
| 11 | 0,23 | 11,9 | 5,0 | glänzend |
| 12 (Vergl.) | 1,12 | 12,5 | 4,9 | glänzend |

**Patentansprüche**

1. Verfahren zur Herstellung von Pfropfpolymerisaten vom ABS-Typ durch Emulsionspolymerisation mit getrennter Zugabe von Monomeren und Emulgatorlösung zum Kautschuklatex, dadurch gekennzeichnet, daß die Monomeren und die Emulgatorlösung durch separate Zuleitungen gleichzeitig in Inkrementen während eines vorgegebenen Zeitraums dem Kautschuklatex zugefügt werden, wobei der vorgegebene Zeitraum n Zeitintervalle $\Delta t_n$ enthält mit n = 3 bis 30 und $\Delta t_n$ 5 bis 100 Minuten lang ist und daß mindestens während der ersten Hälfte des vorgegebenen Zeitraums in jedem Zeitintervall $\Delta t_n$ die zugefügten Inkremente

$$A = \frac{\text{Emulgatormenge im Zeitintervall } \Delta\, t_n}{\text{gesamte Emulgatormenge}}$$

und

$$B = \frac{\text{Monomermenge im Zeitintervall } \Delta\, t_n}{\text{gesamte Monomermenge}}$$

solche Werte annehmen, daß $A > B$ und $A:B = 1{,}10$ bis $2{,}00$ ist und im restlichen Anteil des vorgegebenen Zeitraumes in jedem Zeitintervall $\Delta\, t_n$ $A:B > 0{,}35$ ist.

2. Verfahren nach Anspruch 1, dadurch gekennzeichnet, daß mindestens in der ersten Hälfte des vorgegebenen Zeitraums die in jedem Zeitintervall $\Delta\, t_{n+1}$ zugegebene Monomerteilmenge das $0{,}30$- bis $0{,}95$-fache der im vorhergehenden Zeitintervall $\Delta\, t_n$ zugegebenen Monomermenge beträgt.

3. Verfahren nach Ansprüchen 1 und 2, dadurch gekennzeichnet, daß zusammen mit den Pfropfmonomeren $0{,}05$ bis $1{,}00$ Gew.-Teile (pro 100 Gew.-Teile Pfropfmonomere) eines Mercaptans zugegeben werden.

**Claims**

1. A method of preparing graft polymers of the ABS type by emulsion polymerisation with separate addition of monomers and emulsifier solution to the rubber latex, characterised in that the monomers and the emulsifier solution are added simultaneously in increments over a predetermined period of time through separate feed lines to the rubber latex, wherein the predetermined period of time contains n time intervals $\Delta\, t_n$, where $n = 3$ to 30 and $\Delta\, t_n$ is 5 to 100 minutes long, and that the increments

$$A = \frac{\text{Amount of emulsifier in the time interval } \Delta\, t_n}{\text{Total amount of emulsifier}}$$

and

$$B = \frac{\text{Amount of monomer in the time interval } \Delta\, t_n}{\text{Total amount of monomer}}$$

added in each time interval $\Delta\, t_n$ during at least the first half of the predetermined period of time assume values such that $A > B$ and $A:B = 1.10$ to $2.00$, and in the remaining proportion of the predetermined period of time $A:B > 0.35$ in each time interval $\Delta\, t_n$.

2. A method according to claim 1, characterised in that the partial amount of monomer added in each time interval $\Delta\, t_{n+1}$ during at least the first half of the predetermined period of time is 0.30 to 0.95 times the amount of monomer added in the preceding time interval $\Delta t_n$.

3. A method according to claims 1 and 2, characterised in that 0.05 to 1.00 parts by weight (per 100 parts by weight of graft monomers) of a mercaptan are added together with the graft monomers.

**Revendications**

1. Procédé de production de polymères greffés du type ABS par polymérisation en émulsion avec l'addition séparée de monomères et de solution d'émulsionnant au latex de caoutchouc, caractérisé en ce qu'on ajoute simultanément les monomères et la solution d'émulsionnant par des conduites séparées par incréments pendant une période de temps prescrite au latex de caoutchouc, la période de temps prescrite comprend n intervalles de temps $\Delta t_n$ avec n = 3 à 30 et $\Delta t_n$ est compris entre 5 et 100 min et au moins pendant la première moitié de la période de temps prescrite dans chaque intervalle de temps $\Delta t_n$ les incréments ajoutés

$$A = \frac{\text{Quantité d'émulsionnant dans l'intervalle de temps } \Delta t_n}{\text{Quantité totale d'émulsionnant}}$$

et

$$B = \frac{\text{Quantité de monomères dans l'intervalle de temps } \Delta t_n}{\text{Quantité totale de monomères}}$$

prennent des valeurs telles que A > B et A : B = 1,10 à 2,00 et pendant le reste de la période de temps prescrite dans chaque intervalle de temps $\Delta t_n$ A : B > 0,35.

2. Procédé selon la revendication 1, caractérisé en ce que, au moins pendant la première moitié de la période de temps prescrite, la quantité de monomères ajoutés dans chaque intervalle de temps $\Delta t_{n+1}$ représente 0,30 à 0,95 fois la quantité de monomères ajoutés pendant l'intervalle de temps précédent $\Delta t_n$.

3. Procédé selon les revendications 1 et 2, caractérisé en ce qu'on ajoute en présence des monomères de greffage 0,05 à 1,00 partie en poids (pour 100 parties en poids de monomères de greffage) d'un mercaptan.